Europäisches Patentamt

European Patent Office

Office européen des brevets

(11) Veröffentlichungsnummer: **0 496 210 A2**

# EUROPÄISCHE PATENTANMELDUNG

(21) Anmeldenummer: **92100236.6**

(22) Anmeldetag: **09.01.92**

(51) Int. Cl.5: **C09D 133/00**

(30) Priorität: **22.01.91 DE 4101696**

(43) Veröffentlichungstag der Anmeldung:
**29.07.92 Patentblatt 92/31**

(84) Benannte Vertragsstaaten:
**BE DE ES FR GB IT SE**

(71) Anmelder: **BAYER AG**

**W-5090 Leverkusen 1 Bayerwerk(DE)**

(72) Erfinder: **Dhein, Rolf, Dr.**
**Deswatinesstrasse 30**
**W-4150 Krefeld 1(DE)**
Erfinder: **Reuter, Knud, Dr.**
**Scheiblerstrasse 99**
**W-4150 Krefeld(DE)**
Erfinder: **Köhler, Burkhard, Dr.**
**Mündelheimer Strasse 94**
**W-4150 Krefeld(DE)**
Erfinder: **Rettig, Rainer, Dr.**
**Auf dem Krämersfeld 23**
**W-5060 Bergisch Gladbach 2(DE)**
Erfinder: **Bäcker, Lothar**
**Stürzelberger Strasse 73**
**W-4047 Dormagen 5(DE)**

(54) **Verwendung von Zweikomponenten-Systemen zur Herstellung von Einbrennbeschichtungen.**

(57) Die Verwendung von Gemischen aus a) wäßrig/organischen Lösungen oder Dispersionen von anionisch modifizierten Polyacrylatharzen mit b) organischen Polyisocyanaten und gegebenenfalls c) Hilfs- und Zusatzmitteln der Lacktechnologie als Beschichtungsmittel zur Herstellung von bei 40 bis 160°C einzubrennenden Einbrennbeschichtungen auf beliebigen hitzeresistenten Substraten.

EP 0 496 210 A2

Die Erfindung betrifft die Verwendung von Gemischen aus wäßrig-organischen Lösungen oder Dispersionen von Polyacrylatharzen und organischen Polyisocyanaten, sowie gegebenenfalls den üblichen Hilfs- und Zusatzmitteln als Beschichtungsmittel für Einbrennbeschichtungen.

Die Reduzierung organischer Lösemittelanteile in Lacken ist in vielen Bereichen aus ökologischen und arbeitshygienischen Gründen ein aktuelles Problem, Der zumindest teilweise Ersatz organischer Lacklösemittel durch Wasser ist daher für die moderne Beschichtungstechnik von großer Bedeutung.

Die bei industriell applizierten Beschichtungen überwiegend eingesetzten Einbrenn-Lacksysteme, z.B. für die Metallbeschichtung (Automobil-Erst- und Reparaturlackierung, Haushaltsgerätebeschichtung etc.) erfordern entweder Einbrenntemperaturen von 130°C und mehr (z.B. Melaminharz-Vernetzung, Pulverlacke, Epoxidharz-Vernetzung) oder enthalten als nicht-wäßriges System größere Mengen an organischen Lösemitteln (z.B. Zweikomponenten-Polyurethanlacke). Es besteht daher ein erheblicher Bedarf an bei niedrigerer Temperatur einbrennbaren - d.h. energiesparenden - Lacksystemen, die rasch und vollständig zu harten, elastischen und lösemittelbeständigen Beschichtungen vernetzbar sind.

Es war daher die der Erfindung zugrundeliegende Aufgabe, ein neues Beschichtungssystem zur Verfügung zu stellen, welches aus überwiegend wäßriger Phase applizierbar ist und bei nur mäßig erhöhten Temperaturen zu lacktechnisch hochwertigen Lackfilmen ausgehärtet werden kann, ohne daß hierbei Spaltprodukte, beispielsweise Blockierungsmittel für Polyisocyanate abgespalten werden.

Derartige Lacksysteme sind bislang nicht bekannt geworden. So sind beispielsweise die wäßrigen Lacksysteme gemäß DE-OS 2 507 842 oder DE-OS 2 507 884 auf den Einsatz von blockierten Polyisocyanaten angewiesen, während die Systeme der DE-OS 38 29 587 bei Raumtemperatur ausgehärtet werden, wobei jeglicher Hinweis fehlt, wie die Systeme modifiziert werden müßten, um zu hochwertigen Einbrennlacken zu gelangen. Die gleiche Feststellung rechtfertigt sich im Hinblick auf den Beitrag "Wäßrige Zweikomponenten-Polyurethan-Reaktivsysteme in der Beschichtungstechnik" (Tagungsband zum XX. FATIPEC-Kongreß, Nizza, 17. bis 21.9.1990, S. 239 bis 245).

Die vorstehend genannte Aufgabe konnte mit der nachstehend näher beschriebenen erfindungsgemäßen Verwendung gelöst werden.

Gegenstand der Erfindung ist die Verwendung von Gemischen aus

a) Lösungen oder Dispersionen, bestehend aus

a1) 100 Gew.-Teilen einer gelöst oder dispergiert vorliegenden Harzkomponente, bestehend aus mindestens einem Hydroxylgruppen aufweisenden Polyacrylatharz einer Hydroxylzahl von 15 bis 200 mg KOH/g Festharz, einer Säurezahl von 5 bis 250 mg KOH/g Festharz und einem Gehalt an chemisch gebundenen Carboxylat- und/oder Sulfonatgruppen von insgesamt 8 bis 450 Milliäquivalenten pro 100 g Feststoff,

a2) 25 bis 395 Gew.-Teilen Wasser,

a3) 5 bis 125 Gew.-Teilen einer Lösungsmittelkomponente, bestehend aus mindestens einem organischen Lösungsmittel mit einem Siedepunkt oder -bereich bei 1013 mbar von 100 bis 300°C,

und gegebenenfalls

a4) Hilfs- und Zusatzmitteln der in der Polyacrylatchemie bekannten Art,

mit

b) organischen Polyisocyanaten in einer solchen Menge, die einem Äquivalentverhältnis von Isocyanatgruppen der Komponente b) zu gegenüber Isocyanatgruppen reaktionsfähigen Gruppen der Komponente a1) von 0,7:1 bis 3:1 entsprechen

und gegebenenfalls

c) Hilfs- und Zusatzmitteln der Lacktechnologie als Beschichtungsmittel zur Herstellung von bei 40 bis 160°C einzubrennenden Einbrennbeschichtungen auf beliebigen hitzeresistenten Substraten.

Der Bestandteil a) der erfindungsgemäß zu verwendenden Gemische besteht zumindest formal aus einer wässrigorganischen Lösung bzw. Dispersion von Hydroxylgruppen aufweisenden Polyacrylatharzen a1) in a2) Wasser und a3) organischen Lösungsmitteln, die gegebenenfalls a4) Hilfs- und Zusatzmittel der aus der Polyacrylatchemie bekannten Art enthalten kann. Dies bedeutet jedoch nicht, daß bei der Herstellung der erfindungsgemäß zu verwendenden Gemische zwingend in einem ersten Verfahrensschritt die besagte Lösung bzw. Dispersion a) mit allen Bestandteilen vorhanden sein muß, um mit der vorgelegten Lösung oder Dispersion a) die übrigen Bestandteile b) und gegebenenfalls c) abzumischen, obwohl dies selbstverständlich ein möglicher Weg zur Herstellung der erfindungsgemäß zu verwendenden Gemische darstellt. Eine Variante dieser denkbaren Methode der Herstellung der erfindungsgemäß zu verwendenden Gemische bestünde beispielsweise darin, a1) zunächst nur in Anteilen von a2) und/oder a3) gelöst oder dispergiert vorzulegen und die restlichen Mengen a2) und a3) gleichzeitig mit b) oder nach b) dem Gemisch einzuverleiben. Wesentlich ist letztendlich nur, daß die angegebenen Mengen der Einzelkomponenten in dem gebrauchsfertigen Beschichtungsmittelgemisch aus a), b) und gegebenenfalls c) enthalten sind. Die oben gewählte Formulierung dient daher lediglich der Beschreibung der Zusammensetzung der erfindungsgemäß zu verwendenden Gemische und stellt keine Einschränkung bezüglich der Vorgehensweise bei der Herstellung der Gemische dar.

Bei den Polyacrylatharzen a1) handelt es sich um hydroxyfunktionelle Copolymerisate des Hydroxylzahlbereichs 15 bis 200 mg KOH/g, des Säurezahlbereichs 5 bis 250 mg KOH/g, die im übrigen einen Gehalt an chemisch gebundenen Carboxylat- und/oder Sulfonatgruppen von insgesamt 8 bis 450 Milliäquivalenten pro 100 g Feststoff aufweisen. Die Säurezahl bezieht sich hierbei sowohl auf die freien, nicht neutralisierten Säuregruppen, insbesondere Carboxylgruppen, als auch auf die neutralisiert vorliegenden Säuregruppen, insbesondere Carboxylatgruppen. Die Copolymerisate weisen im allgemeinen ein nach der Methode der Gelpermeationschromatographie unter Verwendung von Polystyrol als Standard ermittelbares Molekulargewicht $M_n$ von 500 bis 50.000, vorzugsweise 1.000 bis 25.000 auf.

Vorzugsweise handelt es sich bei den Copolymerisaten a1) um solche aus

A 1 bis 30, bevorzugt 1 bis 10 Gew.-% Acrylsäure und/oder Methacrylsäure,

B 0 bis 50 Gew.-% Methylmethacrylat,

C 0 bis 50 Gew.-% Styrol, wobei die Summe von B + C 10 bis 70 Gew.-% ergibt,

D 10 bis 45 Gew.-% eines oder mehrerer $C_{1-8}$-Alkylacrylate,

E 5 bis 45 Gew.-% eines oder mehrerer monohydroxyfunktioneller Alkylacrylate oder Alkylmethacrylate,

F 0 bis 15 Gew.-% anderer olefinisch ungesättigter Monomerer

wobei die Summe aus A bis F 100 Gew.-% ergibt, wobei außerdem 5 bis 100 % der einpolymerisiert vorliegenden Säuregruppen in mit aliphatischen Aminen oder mit Ammoniak neutralisierter Form vorliegen, so daß der Gehalt der Copolymerisate an anionischen salzartigen Gruppen den oben gemachten Angaben entspricht.

Die einpolymerisiert vorliegenden ungesättigten Säuren A und gegebenenfalls F werden, wie ausgeführt, zumindest teilweise neutralisiert, so daß die resultierenden anionischen Gruppen die Löslichkeit oder Dispergierbarkeit der Copolymerisate in Wasser gewährleisten bzw. zumindest erleichtern. Im Falle des Vorliegens von nur geringen Konzentrationen an salzartigen Gruppen kann die Löslichkeit bzw. Dispergierbarkeit der Copolymerisate in Wasser durch Mitverwendung von externen Emulgatoren erleichtert werden. Auf jeden Fall muß die Wasserverdünnbarkeit der Copolymerisate entweder als Dispersion oder kolloid- bis moleculardisperse "Losung" gewährleistet sein. Bei der Herstellung der Copolymerisate a1) durch Emulsionspolymerisation wird Methacrylsäure bevorzugt eingesetzt, während bei der Herstellung durch Lösungspolymerisation Acrylsäure die bevorzugte Monocarbonsäure A darstellt.

Die Monomeren B und C können so variiert werden, daß in der Summe B + C von 10 bis 70 Gew.-% ausschließlich eines der Monomeren enthalten ist, wobei dann Methylmethacrylat bevorzugt wird, jedoch ist es besonders bevorzugt, sowohl Methylmethacrylat als auch Styrol nebeneinander einzusetzen.

Als $C_{1-8}$-Alkylacrylat D kommen beispielsweise Methylacrylat, Ethylacrylat, n-Propylacrylat, iso-Propylacrylat, n-Butylacrylat, iso-Butylacrylat, n-Hexylacrylat, n-Octylacrylat, 2-Ethylhexylacrylat in Betracht. Bevorzugt werden n-Butylacrylat, n-Hexylacrylat, 2-Ethylhexylacrylat, insbesondere n-Butyl- und/oder n-Hexylacrylat in Betracht.

Als hydroxylfunktionelle (Meth)acrylate E kommen beispielsweise Hydroxyethyl(meth)acrylat, 2-Hydroxypropyl(meth)acrylat, 3-Hydroxypropyl-(meth)acrylat, 4-Hydroxybutyl(meth)acrylat oder beliebige Gemische dieser Monomeren in Betracht. Bevorzugt werden 2-Hydroxyethylmethacrylat und das technische Gemisch aus 2- und 3-Hydroxypropylmethacrylat.

Die weiteren Monomerbausteine F können substituierte Styrolabkömmlinge, wie beispielsweise die isomeren Vinyltoluole, $\alpha$-Methylstyrol, Propenylbenzol, $C_5$-$C_{12}$-Cycloalkyl(meth)acrylate, Vinylester wie Vinylacetat, -propionat oder -versatat, Vinylsulfonsäure darstellen, wobei die Gesamtmenge an polymerisierbaren Säuren (Carbonsäuren A zuzüglich gegebenenfalls die unter F genannten Säuren) 30 Gew.-% nicht überschreitet.

Zur zumindest teilweisen Neutralisation der einpolymerisiert vorliegenden Säuregruppen kommen Ammoniak oder aliphatische Amine wie beispielsweise Triethylamin, 2-Amino-2-methyl-propanol(1), Dimethylethanolamin, Diethylethanolamin oder beliebige andere aliphatische Amine, vorzugsweise des Molekulargewichtsbereich 31 bis 200, in Betracht.

Bei der Komponente a3) handelt es sich um organische Lösungsmittel, die unter Normaldruck (1013 mbar) unterhalb 300°C, vorzugsweise bei 100 bis 250°C sieden, und die vorzugsweise einen Löslichkeitsparameter $\delta$ entsprechend der Tabelle von H. Burrell in Polymer Handbook, (John Wiley & Sons (New York-London-Sydney-Toronto), 2. Auflage, S. IV-341 bis 344 von 8,0 bis 12,6 $cal^{1/2}$ $cm^{-3/2}$ aufweisen. Bei dort nicht aufgeführten Lösungsmitteln gelten die nach der ebenfalls dort (S. IV-338/339) zitierten Methode von Small (Originallit.: P.A. Small, J. Appl. Chem, 3, 71 (1953)) aus den dort gelisteten Strukturparametern, dem Molekulargewicht und der bei 25°C gemessenen Dichte berechneten Werte. Die bevorzugten, diesen Definitionen entsprechenden Lösungsmittel weisen im übrigen Ether-und/oder Estergruppen im Molekül auf und sind zumindest soweit mit Wasser verträglich, daß die Lösungen bzw. Dispersionen a) Systeme mit homogen verteilter H$_2$O/Cosolvens-Phase darstellen. Beispiele für gut geeignete Lösungsmittel a3) sind 1,4-Dioxan ($\delta$ = 10,0), 1,3,5-Trioxan, Diethylenglykoldimethylether (Diglyme), 1,3-Dioxolan ($\delta$ = 10,2), Ethylenglykoldiacetat, Butyldiglykolacetat oder deren Gemische. Grundsätzlich möglich, jedoch keineswegs bevorzugt, ist auch die Mitverwendung von untergeordneten Mengen an Lösungsmitteln mit gegenüber Isocyanatgruppen reaktionsfähigen Gruppen, beispielsweise vergleichsweise leicht flüchtigen Alkoholen wie n-Butanol oder Isobutanol.

Die Herstellung der Copolymerisate a1) kann beispielsweise nach dem Prinzip der Lösungspolymerisation in organischen Lösungsmitteln erfolgen. Geeignete Lösungsmittel sind beispielsweise Toluol, Xylol, Chlorbenzol, Ethyl- oder Butylacetat, Methyl- oder Ethylglykolacetat, Methoxypropylacetat, Butylglykol, Dioxan, Ethylenglykolmono- oder -diethylether, Aceton, Butanon, Methylenchlorid oder beliebige Gemische derartiger Lösungsmittel. Bei der Herstellung der Copolymerisate a1) in Lösung werden jedoch vorzugsweise als Lösungsmittel solche der als Komponente a3) geeigneten Art eingesetzt, so daß eine Entfernung des Lösungsmittels nach Beendigung der Copolymerisationsreaktion nicht erforderlich ist. Im Falle der Verwendung von anderen Lösungsmitteln der oben beispielhaft genannten Art müssen diese selbstverständlich vor der Herstellung der Lösungen bzw. Dispersionen a) entfernt werden.

Als Polymerisationsstarter dieser radikalischen Lösungspolymerisation kommen z.B. aliphatische Azoverbindungen wie Azoisobutyronitril (AIBN) oder peroxidische Verbindungen, z.B. Benzoylperoxid, tert.-Butylperoctoat, tert.-Butylperpivalat, tert.-Butylperbenzoat oder Di-tert.-Butylperoxid in Frage. Als Regler kommen vor allem Schwefelverbindungen, wie z.B. Dodecylmercaptan (Dodecanthiol) oder Thioglykol in Betracht.

Nach beendeter Polymerisation erfolgt die Herstellung der Lösungen oder Dispersionen a) vorzugsweise dergestalt, daß die organische Polymerlösung in Wasser a2) eingeleitet wird, wobei der Wasserphase im allgemeinen ein Neutralisationsmittel der beispielhaft genannten Art zugesetzt wird. Falls zur Herstellung der Polymerisate Lösungsmittel der als Komponente a3) geeigneten Art mitverwendet worden sind, entstehen auf diese Weise direkt erfindungsgemäß verwendbare Lösungen oder Dispersionen a). Falls andere, als Komponente a3) ungeeignete Lösungsmittel eingesetzt worden waren, müssen diese durch erfindungsgemäß geeignete Lösungsmittel a3) ersetzt werden. Dies erfolgt vor oder nach Durchmischung der Copolymerisatlösung mit dem Wasser durch Abdestillieren des ungeeigneten Hilfslösungsmittels und Zugabe des geeigneten Lösungsmittels in beliebiger Reihenfolge.

Besonders vorteilhaft ist indessen die Herstellung der Copolymerisate a1) direkt in wäßriger Dispersion nach dem Verfahren der Emulsionspolymerisation. Als Radikalstarter kommen hier insbesondere Peroxodisulfate, z.B. Kalium- oder Ammoniumperoxodisulfat, in Betracht. Bei der Herstellung der Copolymerisate a1) nach dem Prinzip der Emulsionspolymerisation können auch externe Emulgatoren wie beispielsweise anionische, wie solche auf Alkylsulfat-Basis, Alkylarylsulfonate, Alkylphenolpolyethersulfate wie z.B. in Houben-Weyl, Methoden der organischen Chemie, Erweiterungs- und Folgebände, 4. Auflage, Band E 20 (Teil 1, Seiten 259 bis 262) angegeben, oder nichtionische Emulgatoren, wie z.B. die Alkoxylierungs- insbesondere Ethoxylierungsprodukte von Alkanolen, Phenolen oder Fettsäuren mitverwendet werden, die im Anschluß an die Herstellung der Copolymerisate in dem System verbleiben und als Hilfsmittel a4) angesehen werden können. Im Falle des Vorliegens derartiger Emulgatoren genügt oftmals eine bereits sehr geringe Neutralisation der vorliegenden Säuregruppen zur Gewährleistung der Homogenität der Lösungen oder Dispersionen a). Die dennoch zumindest in geringer Konzentration eingesetzten Neutralisationsmittel können dem System bereits während der Emulsionspolymerisation einverleibt werden.

Zur Herstellung der erfindungsgemäß zu verwendenden Lösungen oder Dispersionen a) genügt dann im allgemeinen der Zusatz des Lösungsmittels a3) zu dem in Wasser emulgiert vorliegenden Copolymerisat a1).

Auch bei der Verwendung von Copolymerisaten a1), die nach dem Prinzip der Lösungspolymerisation hergestellt worden sind, ist grundsätzlich die Mitverwendung von Emulgatoren der beispielhaft genannten Art bei der Herstellung der Lösungen oder Dispersionen a) möglich.

Bei der Herstellung der erfindungsgemäß zu verwendenden Gemische werden die Einzelkomponenten a1) bis a3) in solchen Mengen eingesetzt, daß auf 100 Gew.-Teile der Komponente a1) 25 bis 395 Gew.-Teile der Komponente a2) (Wasser) und 5 bis 125 der Komponente a3) (Lösungsmittel) entfallen, wobei der Anteil des Lösungsmittels a3) maximal 160 Gew.-%, vorzugsweise maximal 65 Gew.-%, bezogen auf das Gewicht des Wassers a2) ausmacht, und wobei im übrigen die Mengenverhältnisse der Einzelkomponenten bevorzugt so gewählt werden, daß der Gewichtsanteil der Komponente a1), bezogen auf das Gesamtgewicht der Komponente a) bei 20 bis 60 Gew.-% liegt.

Als Komponente b) geeignete Polyisocyanate sind insbesondere die sogenannten "Lackpolyisocyanate" mit aromatisch oder (cyclo)-aliphatisch gebundenen Isocyanatgruppen, wobei die letztgenannten aliphatischen Polyisocyanate, wie bereits ausgeführt, besonders bevorzugt sind.

Sehr gut geeignet sind beispielsweise "Lackpolyisocyanate" auf Basis von Hexamethylendiisocyanat oder von 1-Isocyanato-3,3,5-trimethyl-5-isocyanatomethyl-cyclohexan (IPDI) und/oder Bis(isocyanatocyclohexyl)-methan, insbesondere solche, welche ausschließlich auf Hexamethylendiisocyanat basieren, Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung in bekannter Weise, vorzugsweise durch Destillation von überschüssigem Ausgangsdiisocyanat bis auf einen Restgehalt von weniger als 0,5 Gew.-% befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N',N''-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-PS 4 324 879 erhalten werden können, und die im wesentlichen aus N,N',N''-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisende Polyisocyanate auf Basis von Hexamethylendiisocyanat, wie sie durch katalytische Oligomerisierung von Hexamethylendiisocyanat unter Verwendung von Trialkylphosphinen entstehen. Besonders bevorzugt sind die zuletzt genannten Gemische einer Viskosität bei 23°C von 50 bis 500 mPa.s und einer zwischen 2,2 und 5,0 liegenden NCO-Funktionalität.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4'-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate, wie sie durch Umsetzung von überschüssigen Mengen an 2,4-Diisocyanatotoluol mit mehrwertigen Alkoholen wie Trimethylolpropan und anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die ebenfalls im Anschluß an ihre Herstellung vorzugsweise destillativ von überschüssigen monomeren Diisocyanaten befreit worden sind.

Grundsätzlich möglich ist selbstverständlich auch die Verwendung von unmodifizierten Polyisocyanaten der beispielhaft genannten Art, falls diese den gemachten Ausführungen bezüglich der Viskosität entsprechen.

Die Polyisocyanatkomponente b) kann im übrigen aus beliebigen Gemischen der beispielhaft genannten Polyisocyanate bestehen.

Eine Möglichkeit der Herstellung der erfindungsgemäß zu verwendenden Gemische, d.h. der Mischungen aus den Einzelkomponenten a) und b) besteht in einem einfachen Verrühren der Einzelkomponenten a) und b), wobei die Mengenverhältnisse so gewählt werden, daß NCO/OH-Äquivalentverhältnisse von 0,7:1 bis 3:1, vorzugsweise 1:1 bis 2,5:1, resultieren. Wie jedoch bereits weiter oben ausgeführt, ist es jedoch auch möglich, die erfindungsgemäß zu verwendenden Gemische durch Abmischung der Einzelkomponenten in anderer Reihenfolge herzustellen, da es letztendlich einzig und allein auf die Zusammensetzung der erfindungsgemäß zu verwendenden Gemische ankommt, die von der Reihenfolge des Zusammengebens der Einzelkomponenten unabhängig ist. So kann man beispielsweise a1) zunächst nur im Gemisch mit Anteilen von a2) und/oder a3) vorlegen und gleichzeitig mit oder nach der Zugabe von b) weitere, restliche Mengen an a2) und/oder a3) hinzufügen. Ebenso kann z.B. a1) im Gemisch mit Anteilen von a2) und/oder a3) eingesetzt werden und restliche Mengen a3) im Gemisch mit b) und gegebenenfalls dann noch fehlende Restmengen a2), z.B. zur Viskositätseinstellung anschließend zugegeben werden.

Den erfindungsgemäß zu verwendenden Gemischen aus a) und b) bzw. den zu ihrer Herstellung eingesetzten Einzelkomponenten können gegebenenfalls weitere Hilfs- und Zusatzmittel c) der Lacktechnologie einverleibt werden.

Hierzu gehören beispielsweise weitere Mengen an Wasser und/oder an Lösungsmitteln der als Komponente a3) geeigneten Art zwecks Einstellung der geeigneten Verarbeitungsviskosität der erfindungsgemäßen Beschichtungsmittel. In den gebrauchsfertigen erfindungsgemäßen Beschichtungsmitteln liegen, bezogen auf das Gesamtgewicht aller Komponenten, im allgemeinen 2 bis 25 Gew.-% an organischen Lösungsmitteln und 10 bis 75 Gew.-% Wasser vor.

Weitere Hilfs- und Zusatzmittel sind z.B. Pigmente, Füllstoffe, Verlaufmittel, Entschäumer/Entlüfter und dergleichen.

Die erfindungsgemäßen Beschichtungsmittel können nach allen technisch üblichen Methoden wie z.B. Spritzen, Tauchen oder Streichen auf beliebige hitzeresistente Substrate aufgetragen und bei 40 bis 160°C, vorzugsweise 60 bis 140°C eingebrannt werden, wobei Einbrennzeiten von 15 bis 45 Minuten im allgemeinen ausreichen. Die resultierenden Lackfilme sind kratzfest (nagelhart) und lösungsmittelbeständig, blasenfrei, glänzend und als Klarlacke transparent.

Die erfindungsgemäße Verwendung eignet sich insbesondere zur Herstellung von Grundierungen oder Decklackierungen auf Holz-, Metall- und Kunststoffsubstraten, beispielsweise zur Herstellung von Füllern, Base-coats und Clearcoats bei der Erst- und Reparaturlackierung von Kraftfahrzeugen.

Beispiele (Teile sind stets Gewichtsteile)

In allen Beispielen wird ein 2 l-Rundkolben mit Rückflußkühler, wirksamem Rührer, Innenthermometer sowie Stickstoffeinleitung benutzt.

## Beispiel 1

600 Teile Diethylenglykoldimethylether (DEGDME) werden vorgelegt und auf 100°C erhitzt. Im Verlauf von 2 1/2 h wird dann ein Gemisch aus 119,4 Teilen Acrylsäure, 883,0 Teilen Hydroxypropylmethacrylat, 71,7 Teilen Styrol, 276,3 Teilen Methylmethacrylat, 530,5 Teilen n-Butylacrylat, 469,7 Teilen n-Hexylmethacrylat, 36,2 Teilen Azoisobutyronitril (AIBN) und 13,3 Teilen Dodecanthiol zudosiert. Anschließend wird für 8 h bei 110°C gerührt.

Nach Ende der Nachreaktionszeit werden 50 Teile der Polymerisatlösung mit 2,56 Teilen N,N-Dimethylethanolamin neutralisiert und mit 12 Teilen DEGDME verdünnt. Zu dieser Lösung wird ein Gemisch aus 18,8 Teilen N,N',N''-Tris-(6-isocyanatohexyl)-biuret (techn. Produkt mit untergeordneten Mengen höherer Homologen, einem durchschnittlichen NCO-Gehalt von 22,5 Gew.-% und einer durchschnittlichen Viskosität von ca. 3000 mPa.s/23°C = "Biuretpolyisocyanat") und 6,8 Teilen DEGDME gegeben und anschließend mit 104,8 Teilen Wasser verdünnt. Mit einer Filmziehhantel wird hieraus ein 180 μm-Film (Naßfilm-Dicke) auf einer Glasplatte aufgezogen und 30 Minuten bei 80°C gehärtet. Man erhält einen blasenfreien, transparenten und nagelharten Klarlackfilm.

## Beispiel 2

50 Teile der in Beispiel 1 hergestellten Polymerisat-Lösung werden mit Dimethylethanolamin neutralisiert und mit 12 Teilen DEGDMA/78,8 Teilen Wasser verdünnt. Diese Lösung wird mit einem Gemisch aus 18,8 Teilen Biuretpolyisocyanat gemäß Beispiel 1, 6,8 Teilen DEGDME und 30 Teilen 1,3,5-Trioxan versetzt und anschließend wie in Beispiel 1 ein 180 μm-Naßfilm auf Glas hergestellt. 30 Minuten Härtung bei 80°C ergeben einen nagelharten, transparenten und vollständig blasenfreien Klarlackfilm.

## Beispiel 3

600 Teile Wasser, 3,9 Teile polyethoxyliertes 3-Benzyl-4-hydroxybiphenyl (Polyethoxylierungsgrad ca. 10) und 0,75 Teile Natrium-di-sec.-butylnaphthalinsulfonat werden vorgelegt und auf 80°C erwärmt. Anschließend wird eine Lösung von 1,25 Teilen Ammoniumperoxodisulfat in 11 Teilen Wasser zugegeben. Nach 5 Minuten bei 80°C wird innerhalb von 2 1/4 h bei 80°C ein Gemisch von 117,1 Teilen Styrol, 16,6 Teilen Methylmethacrylat, 141,3 Teilen Butylacrylat, 107,8 Teilen Hydroxyethylmethacrylat, 21 Teilen Methacrylsäure und 7,4 Teilen Dodecanthiol zudosiert. Danach werden 0,25 Teile Ammoniumperoxodisulfat in 12 Teilen Wasser zugegeben; bei 80°C wird dann 2 h nachpolymerisiert. Sämtliche Operationen werden bei intensiver Rührung durchgeführt.

Die Polymerdispersion wird mit 3,26 Teilen Dimethylethanolamin in 5 Teilen Wasser versetzt. 6,16 Teile dieser wäßrigen Dispersion werden mit weiteren 0,14 Teilen Dimethylethanolamin, 9,92 Teilen Diethylenglykoldimethylether und 0,92 Teilen Biuretpolyisocyanat gemäß Beispiel 1 (NCO:OH = 1:1) versetzt. Die Emulsion wird mit einer Naßfilmdicke von 120 μm mit einer Filmziehhantel auf Glas aufgetragen und 30 Minuten bei 80°C getrocknet. Man erhält einen klaren, glänzenden, nagelharten Lackfilm ohne Filmstörungen.

## Beispiel 4

600 Teile Wasser, 3,9 Teile polyethoxyliertes 3-Benzyl-4-hydroxybiphenyl (Polyethoxylierungsgrad ca. 10) und 0,75 Teile Natrium-di-sec.-butylnaphthalinsulfonat werden vorgelegt und auf 80°C erwärmt. Anschließend wird eine Lösung von 1,25 Teilen Ammoniumperoxodisulfat in 11 Teilen Wasser zugegeben. Nach 5 Minuten bei 80°C wird innerhalb von 2 1/4 h bei 80°C ein Gemisch von 117,1 Teilen Styrol, 52,5 Teilen Methylmethacrylat, 141,4 Teilen Butylacrylat, 72,3 Teilen Hydroxyethylmethacrylat, 21 Teilen Methacrylsäure und 7,4 Teilen Dodecylmercaptan zudosiert. Danach werden 0,25 Teile Ammoniumperoxodisulfat in 12 Teilen Wasser zugegeben; bei 80°C wird dann 2 h nachpolymerisiert. Sämtliche Operationen werden bei intensiver Rührung durchgeführt.

Die Polymerdispersion wird mit 3,26 Teilen Dimethylethanolamin in 5 Teilen Wasser versetzt. 18,13 Teile dieser wäßrigen Dispersion werden mit weiteren 27,62 Teilen Diethylenglykoldimethylether und 2,30 Teilen Biuretpolyisocyanat gemäß Beispiel 1 (NCO:OH = 1,25:1) versetzt. Die Emulsion wird mit einer Naßfilmdicke von 300 $\mu$m mit einer Filmziehhantel auf Glas aufgetragen und 30 Minuten bei 80°C getrocknet. Man erhält einen klaren, glänzenden, nagelharten Lackfilm ohne Blasen oder andere Filmstörungen. Die Pendelhärte (nach König, DIN 53 157) der Beschichtung wurde nach 1 d Lagerung bei Raumtemperatur mit 120 sec gemessen.

Beispiel 5

600 Teile DEGDME werden vorgelegt und auf 110°C erhitzt. Im Verlauf von 2 1/2 h wird dann ein Gemisch aus 143,7 Teilen Acrylsäure, 708,7 Teilen Hydroxypropylmethacrylat, 138,4 Teilen Styrol, 332,7 Teilen Methylmethacrylat, 741,3 Teilen n-Butylacrylat, 282,2 Teilen n-Hexylmethacrylat, 37,9 Teilen AIBN und 14,0 Teilen Dodecanthiol zudosiert. Anschließend wird für 8 h bei 110°C gerührt. Nach Ende der Nachreaktionszeit wurde mit 177,7 Teilen Dimethylethanolamin neutralisiert und mit entionisiertem Wasser auf 27,6 % Festgehalt verdünnt. 50 Teile dieser Lösung, 1 Teil DEGDME und eine Mischung aus 8,7 Teilen Biuretpolyisocyanat gemäß Beispiel 1 mit 2,2 Teilen DEGDME wurden verrührt. Mit einer Filmziehhantel wird aus dem Gemisch aus 180 $\mu$m-Film (Naßfilm-Dicke) auf einer Glasplatte aufgezogen und 30 Minuten bei 80°C gehärtet. Man erhält einen blasenfreien, transparenten und nagelharten Klarlackfilm.

Beispiel 6

80 Teile der neutralisierten Polymerlösung aus Beispiel 5, 116 Teile Bayertitan R-KB-4 (Rutil Weißpigment, Fa. Bayer), 0,8 Teile ®Dehydran 671 (Entschäumer, Fa. Henkel) und 20 Teile entionisiertes Wasser wurden zu einer Weißpaste vermahlen. 117,2 Teile des Mahlgutes, weitere 135,5 Teile der obengenannten Polymerlösung aus Beispiel 5, 2,8 Teile Dehydran 671, 1,6 Teile Byk 301 (Verlaufmittel, Fa. Byk-Chemie), 25,1 Teile Biuretpolyisocyanat gemäß Beispiel 1 und 40 Teile Ethylenglykoldiacetat wurden verrührt und mit 15 Teilen entionisiertem Wasser auf eine Auslaufviskosität von 25 sec. im 4 mm-Becher entsprechend DIN 53 211 eingestellt. Der Weißlack wurde mit 35 $\mu$m Trockenfilm-Schichtdicke auf Stahlblech gespritzt und nach 10 Minuten Ablüftzeit bei Raumtemperatur 30 Minuten lang bei 80°C zu einem glänzenden, reinweißen Lackfilm getrocknet. Nach Abkühlen wurde eine Pendelhärte nach König (DIN 53 157) von 160 sec. gemessen.

**Patentansprüche**

1. Verwendung von Gemischen aus
   a) Lösungen oder Dispersionen, bestehend aus

      a1) 100 Gew.-Teilen einer gelöst oder dispergiert vorliegenden Harzkomponente, bestehend aus mindestens einem Hydroxylgruppen aufweisenden Polyacrylatharz einer Hydroxylzahl von 15 bis 200 mg KOH/g Festharz, einer Säurezahl von 5 bis 250 mg KOH/g Festharz und einem Gehalt an chemisch gebundenen Carboxylat- und/oder Sulfonatgruppen von insgesamt 8 bis 450 Milliäquivalenten pro 100 g Feststoff,
      a2) 25 bis 395 Gew.-Teilen Wasser,
      a3) 5 bis 125 Gew.-Teilen einer Lösungsmittelkomponente, bestehend aus mindestens einem organischen Lösungsmittel mit einem Siedepunkt oder -bereich bei 1013 mbar von 100 bis 300°C,
   und gegebenenfalls
      a4) Hilfs- und Zusatzmitteln der in der Polyacrylatchemie bekannten Art, mit
      b) organischen Polyisocyanaten in einer solchen Menge, die einem Äquivalentverhältnis von Isocyanatgruppen der Komponente b) zu gegenüber Isocyanatgruppen reaktionsfähigen Gruppen der Komponente a1) von 0,7:1 bis 3:1 entsprechen
   und gegebenenfalls
      c) Hilfs- und Zusatzmitteln der Lacktechnologie
   als Beschichtungsmittel zur Herstellung von bei 40 bis 160°C einzubrennenden Einbrennbeschichtungen auf beliebigen hitzeresistenten Substraten.

2. Verwendung gemäß Anspruch 1, dadurch gekennzeichnet, daß der Lösungsmittel a3) maximal 65 Gew.-%, bezogen auf die Menge des Wassers a2), ausmacht.

3. Verwendung gemäß Anspruch 1 und 2, dadurch gekennzeichnet, daß als Komponente a3) Ester- und/oder Ethergruppen aufweisende Lösungsmittel der aus der Lacktechnologie an sich bekannten Art verwendet werden.

4. Verwendung gemäß Anspruch 1 bis 3 zur Herstellung von Grundierungen oder Decklackierungen auf Holz-, Metall-oder Kunststoffsubstraten.